# EUROPEAN PATENT APPLICATION

(11) **EP 4 794 174 A1**
(43) Date of publication of application: **19.08.2026**
(21) Application number: 26152626.3
(22) Date of filing: 19.01.2026
(51) Int. Cl.: H02K 1/16, H02K 3/24, H02K 3/34, H02K 3/487, H02K 9/19

(54) **STATOR**

(30) Priority: 12.02.2025 JP 2025020454
(71) Applicant: AISIN CORPORATION, Aichi 448-8650 (JP)
(72) Inventor: Akimori, So, Aichi, 448-8650 (JP); Saito, Naoto, Aichi, 448-8650 (JP)
(74) Representative: Kramer Barske Schmidtchen Patentanwälte PartG mbB

(57) **Abstract**

A stator (100) includes: a stator core (10) having a ring shape and including a plurality of teeth (40) arranged in a circumferential direction and a plurality of slots (41) each of which is formed between the teeth (40) in the circumferential direction and opened radially inward; and a sealing member (30, 300, 310, 311, 312) that closes an opening (41b, 410b, 411b) on a radially inner side of the slot (41) and has a radial thickness at a center in the circumferential direction thinner than that at an end portion in the circumferential direction. The space (41b2) inside the slot (41) existing radially outside the sealing member (30, 300, 310, 311, 312) is a refrigerant flow path.

## Description

### TECHNICAL FIELD

The present disclosure relates to a stator.

### BACKGROUND DISCUSSION

Conventionally, there is known a configuration in which a coil is disposed in a slot included in a stator core, and an opening portion of the slot on a radially inner side is sealed with resin or the like (for example, JP 2002-10554 A).

In the above-described conventional technique, there is almost no gap between a sealing member that seals the opening portion of the slot and the coil. Therefore, it is difficult to cause a refrigerant for cooling the coil to flow in the slot, and it is difficult to efficiently cool a stator.

A need thus exists for a stator that has improved in cooling efficiency.

### SUMMARY

A stator according to an embodiment includes: a stator core having a ring shape, the stator core including a plurality of teeth arranged in a circumferential direction and a plurality of slots each of which is formed between the plurality of teeth in the circumferential direction and opened radially inward; and a sealing member that closes an opening on a radially inner side of each of the plurality of slots and has a radial thickness at a center in the circumferential direction thinner than a radial thickness at an end portion in the circumferential direction, in which a space inside the each of the plurality of slots existing radially outside the sealing member is a refrigerant flow path.

That is, the sealing member closes the opening on the radially inner side of the slot, and the radial thickness of the sealing member is thinner at the center in the circumferential direction than at the end portion in the circumferential direction. Therefore, the refrigerant can flow more in at least one of the radially outer side and the radially inner side of the sealing member as compared with the configuration in which the radial thickness is constant over the entire region in the circumferential direction or is thicker at the center in the circumferential direction. As a result, the cooling efficiency of the stator can be improved as compared with the configuration in which the radial thickness is constant over the entire region in the circumferential direction or is thicker at the center in the circumferential direction.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a front view of a stator core;
Fig. 2 is a plan view of the stator core;
Fig. 3 is an enlarged view illustrating a sealing member and its periphery in an enlarged manner;
Figs. 4A and 4B are views illustrating a second embodiment;
Figs. 5A and 5B are views illustrating third and fourth embodiments, respectively;
Figs. 6A and 6B are views illustrating fifth and sixth embodiments, respectively; and
Figs. 7A and 7B are views illustrating seventh and eighth embodiments, respectively.

### DETAILED DESCRIPTION

Here, embodiments of the present disclosure will be described in the following order.
(1) Configuration of Stator Core:
(2) Configuration of Sealing Member:
(3) Second Embodiment:
(4) Third and Fourth Embodiments:
(5) Fifth to Eighth Embodiments:
(6) Other Embodiments and the like:

### (1) Configuration of Stator Core:

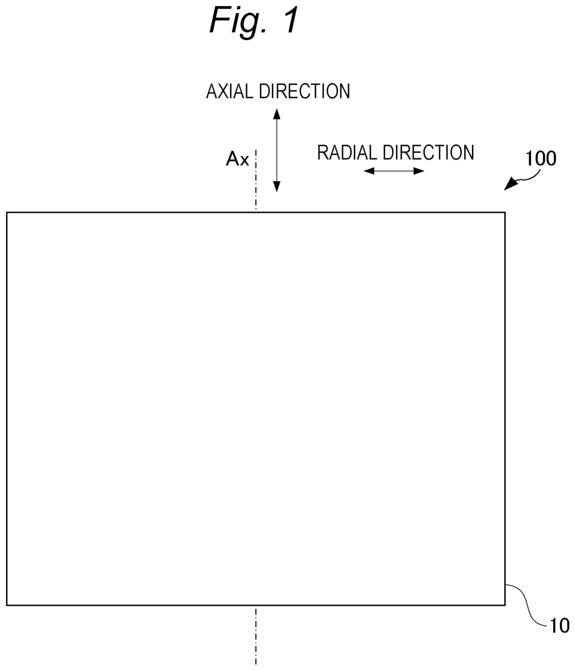

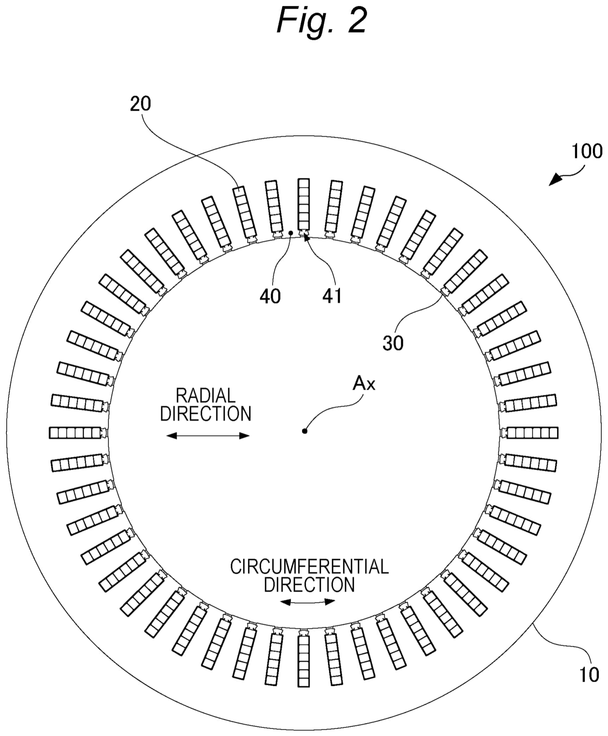

Fig. 1 is a front view of a stator 100 according to an embodiment, and Fig. 2 is a plan view of the stator 100 according to the embodiment. The stator 100 includes a stator core 10, coils 20, and sealing members 30. The stator core 10 is a member having a ring shape, and in Fig. 1, a central axis Ax of the ring formed by the stator core 10 is indicated by an alternate long and short dash line. Fig. 2 illustrates a state in which the stator core 10 is viewed from above in Fig. 1 along the central axis Ax. Fig. 2 illustrates a state in which the coil 20 is cut in a direction perpendicular to the axial direction at the position of an axial end surface of the stator core 10.

A rotor, not illustrated, is disposed inside the ring formed by the stator core 10. The rotor is a member that rotates about the central axis Ax of the ring formed by the stator core 10. In the present specification, a direction parallel to the central axis Ax is referred to as an axial direction, a direction perpendicular to the central axis Ax is referred to as a radial direction, and a rotation direction around the central axis Ax is referred to as a circumferential direction. In the radial direction, a direction away from the central axis Ax is referred to as a radially outer side, and a direction approaching the central axis Ax is referred to as a radially inner side.

The stator core 10 includes a plurality of teeth 40 arranged in the circumferential direction and a plurality of slots 41 formed between the teeth 40 in the circumferential direction. In the present embodiment, the tooth 40 is a section that protrudes radially inward from the radially inner surface of the stator core 10. The teeth 40 are formed at regular intervals in the circumferential direction on the entire circumference of the inner circumference of the stator core 10. The number of teeth 40 may be various. In the present embodiment, the cross-sectional shapes of the tooth 40 in the direction perpendicular to the axial direction are the same at any locations in the axial direction. Therefore, the tooth 40 is a section that protrudes from the radially outer side toward the radially inner side in the radial direction and extends in the axial direction in a state where the cross-sectional shape in the direction perpendicular to the axial direction is the same. A space formed between the teeth 40 in the circumferential direction is a slot 41.

The coil 20 is accommodated in the slot 41. When the plurality of coils 20 are accommodated in the slot 41, the coils 20 are wound around the tooth 40. The number of coils 20 accommodated in the slot 41 and arranged in the radial direction is not limited, but is six in the present embodiment. The coil 20 is connected to a wiring extending from a control circuit at a coil end portion, not illustrated, and a predetermined voltage is applied thereto.

### (2) Configuration of Sealing Member:

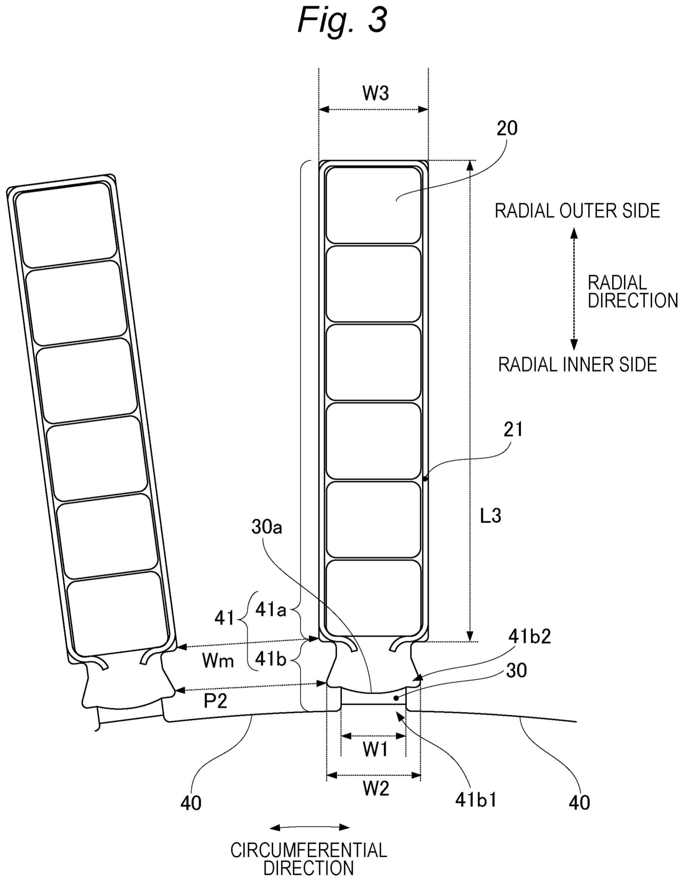

The sealing member 30 is a member that closes an opening of the slot 41 on a radially inner side. Fig. 3 is an enlarged view illustrating the sealing member 30 illustrated in Fig. 2 and its periphery in an enlarged manner. In the present embodiment, the teeth 40 are not connected on the radially inner side. That is, the radially inner sides of the slots 41 are open, and the open portions are not connected at any location in the axial direction. However, the opening on the radially inner side is closed by the sealing member 30.

Specifically, the slot 41 includes a coil arrangement portion 41a which is a space for arranging the coils 20, and an opening portion 41b which is a section for opening the space of the coil arrangement portion 41a radially inward. In the present embodiment, an insulating member 21 is disposed between the coil 20 and a wall surface of the slot 41. The insulating member 21 is a non-conductive material, is interposed between the coil 20 and the wall surface of the slot 41, and prevents the coil 20 from being electrically connected to the slot 41.

A circumferential width W3 of the coil arrangement portion 41a included in the slot 41 is substantially equal to a value obtained by adding the thickness of the insulating member 21 × 2 to the circumferential width of the coil 20. A radial length L3 of the coil arrangement portion 41a is substantially equal to a value obtained by adding the thickness of the insulating member 21 × 2 to the radial length of the coil 20 × 6. Therefore, the six coils 20 whose outer periphery is surrounded by the insulating member 21 when viewed from the axial direction are arranged and positioned in the coil arrangement portion 41a.

A portion of the slot 41 on the radially inner side with respect to the coil arrangement portion 41a is the opening portion 41b. In the embodiment illustrated in Fig. 3, the opening portion 41b includes a first opening portion 41b1 existing on the innermost side in the radial direction and a second opening portion 41b2 adjacent to the first opening portion 41b1 on the radially outer side.

Specifically, the circumferential width of the first opening portion 41b1 is substantially constant at a first width W1. That is, in the first opening portion 41b1, a state in which the circumferential width is the first width W1 is continuous in the axial direction. Therefore, the first opening portion 41b1 is an opening the circumferential width of which is the constant first width W1 over the entire length of the stator core 10 when viewed from the radial direction. On the other hand, regarding the circumferential width of the second opening portion 41b2, the width of the section adjacent to the first opening portion 41b1 is a second width W2, which is the largest, and the width gradually decreases toward the radially outer side. In addition, at the boundary portion between the second opening portion 41b2 and the coil arrangement portion 41a, the circumferential width of the second opening portion 41b2 is substantially constant. The second opening portion 41b2 is a hole extending in the axial direction in a state where the cross-sectional shape in a direction perpendicular to the axial direction is the same.

Note that in the present embodiment, width W3 > width W2 > width W1. In the present embodiment, the width of the opening portion 41b changes in the radial direction, and the maximum value thereof is the width W2. In the present embodiment, the width W2, which is the maximum value of the width in the circumferential direction of the opening on the radially inner side of the slot 41, is smaller than the circumferential width W3 of the slot 41.

A rotor is disposed radially inside the stator core 10 according to the present embodiment, and most of the magnetic flux of the magnetic field generated by the rotor passes through the inside of the tooth 40 while avoiding the portion where the air exists. The amount of magnetic flux passing through the inside of the tooth 40 depends on a width Wm of the narrowest portion of the circumferential width of the tooth 40. That is, the amount of magnetic flux passing through the tooth 40 increases as the width Wm increases.

If the width W2, which is the maximum value of the width of the opening portion 41b, is larger than the width W3 of the coil arrangement portion 41a, the width of the narrowest portion of the circumferential width of the tooth 40 is the portion P2 where the circumferential width of the first opening portion 41b1 is the width W2, which is the maximum value. In this case, the amount of magnetic flux passing through the tooth 40 is defined by the portion P2, and the amount of magnetic flux is smaller than the amount of magnetic flux corresponding to the width Wm. Therefore, in the present embodiment, the width W2, which is the maximum value of the circumferential width of the opening portion 41b, is smaller than the circumferential width W3 of the slot. In this case, the amount of magnetic flux passing through the teeth 40 is not defined by the shape of the opening portion 41b, but is defined by the shape of the coil arrangement portion 41a. Therefore, according to the present embodiment, the opening portion 41b does not reduce the amount of magnetic flux passing through the tooth 40.

The sealing member 30 is a member that closes the opening portion 41b on the radially inner side of the slot 41. In the present embodiment, the sealing member 30 is a member that closes the first opening portion 41b1 as illustrated in Fig. 3. Specifically, the sealing member 30 is a member extending from one end portion to the other end portion of the first opening portion 41b1 in the circumferential direction, and exists over the entire length of the stator core 10 in the axial direction. Therefore, the sealing member 30 closes the first opening portion 41b1.

In the present embodiment, the radially inner surface of the sealing member 30 exists radially outside the radially inner surface of the tooth 40. Therefore, the sealing member 30 does not exist on the radially inner side with respect to the radially inner surface of the tooth 40. If the sealing member 30 exists on the radially inner side with respect to the radially inner surface of the tooth 40, it is necessary to dispose the radially outer surface of the rotor on the radially inner side with respect to the sealing member 30 so that the rotor does not interfere with the sealing member 30. In this case, since the distance between the stator core 10 and the rotor is long, the amount of magnetic flux from the rotor entering the stator core 10 is smaller as compared with the case where the distance is not long. However, in the present embodiment, since the sealing member 30 does not exist on the radially inner side with respect to the radially inner surface of the tooth 40, the radially outer surface of the rotor can be brought closer to the radially inner surface of the tooth 40, and the amount of magnetic flux from the rotor entering the stator core 10 can be prevented from being reduced.

In the present embodiment, the second opening portion 41b2 is a space that extends in the axial direction and penetrates to both ends of the stator core 10 in the axial direction. In the present embodiment, the second opening portion 41b2 serves as a refrigerant flow path. That is, the second opening portion 41b2, which is a space inside the slot 41 and existing radially outside the sealing member 30, serves as a flow path of the refrigerant flowing in the axial direction.

The radial thickness of the sealing member 30 is thinner at the center in the circumferential direction than at the end portion in the circumferential direction. Specifically, a recess 30a is formed in the radially outer surface of the sealing member 30. The recess 30a is a section whose thickness decreases radially inward. According to the above configuration, the second opening portion 41b2 serving as the refrigerant flow path can be widened radially inward, and more refrigerant can flow as compared with the case where the recess 30a is not present.

Further, the recess 30a is formed by providing a curved surface on the radially outer side of the sealing member 30. That is, the recess 30a smoothly changes from one end portion toward the other end portion of the sealing member 30 when viewed from the axial direction, and there is no portion where the shape of the surface rapidly changes, such as a step or a protrusion. Therefore, as compared with the case where the recess 30a is formed in a shape other than the curved surface, the resistance acting on the refrigerant flowing while being in contact with the recess 30a can be reduced.

Note that the sealing member 30 closes the opening portion 41b to prevent the refrigerant in the slot 41 from leaking radially outward. Therefore, both ends of the sealing member 30 in the circumferential direction are in close contact with the wall surfaces of both ends of the first opening portion 41b1 in the circumferential direction, and are not peeled off during the use of the stator core 10. As a method for bringing both ends of the sealing member 30 in the circumferential direction into close contact with the wall surfaces of both ends of the first opening portion 41b1 in the circumferential direction, various methods can be adopted.

For example, a configuration in which a liquid thermosetting resin is disposed over the entire circumferential length of the first opening portion 41b1 and is cured by heat to form the sealing member 30 may be adopted. In this case, in the process of curing the thermosetting resin, both ends of the sealing member 30 in the circumferential direction are brought into close contact with the wall surfaces of both ends of the first opening portion 41b1 in the circumferential direction. According to the above configuration, the sealing member 30 can be brought into close contact with the wall surfaces of both ends of the first opening portion 41b1 in the circumferential direction at the same time when the sealing member 30 is formed. Therefore, the sealing member 30 can be easily brought into close contact with the wall surfaces of both ends of the first opening portion 41b1 in the circumferential direction.

In a case where the liquid thermosetting resin is cured by heat, the volume is generally reduced. Therefore, the recess 30a with a curved surface can be easily formed by curing the thermosetting resin by heat. If the recess 30a is formed only on the radially outer surface of the sealing member 30 and the radially inner surface is a flat surface, thermal curing may be performed in a state where a flat jig or the like is disposed on the radially inner surface.

Of course, the sealing member 30 may be bonded to the opening on the radially inner side of the slot 41 by an adhesive. For example, before the sealing member 30 is disposed in the first opening portion 41b1 of the slot 41, the sealing member 30 may be manufactured by injection molding or the like, and the manufactured sealing member 30 may be brought into close contact with the first opening portion 41b1 of the slot 41 with an adhesive. According to this configuration, the sealing member 30 can be reliably brought into close contact with the wall surfaces of both ends of the first opening portion 41b1 in the circumferential direction.

### (3) Second Embodiment:

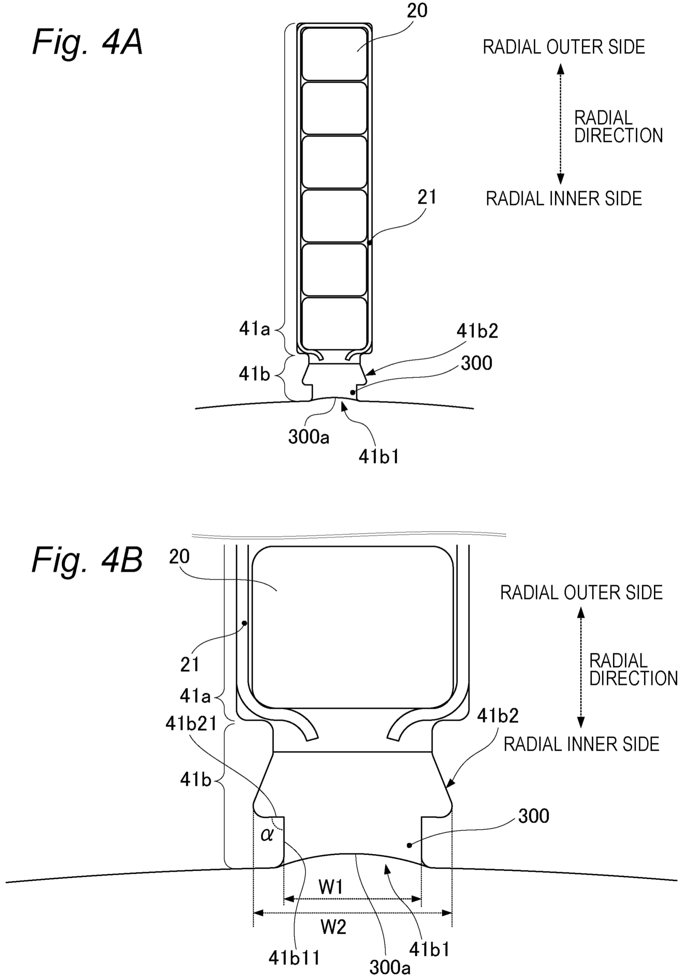

In a sealing member, a recess, which is a portion where the radial thickness decreases, may be formed on either the radially inner side or the radially outer side. Figs. 4A and 4B are views illustrating a configuration example in which a recess 300a is formed on the radially inner side of a sealing member 300. Fig. 4B is an enlarged view of the sealing member 300 illustrated in Fig. 4A. In the embodiment illustrated in Figs. 4A and 4B, components other than the sealing member 300 are similar to those of the above-described embodiment. Therefore, in the second embodiment, components similar to those in the above-described embodiment are denoted by the same reference numerals (the same applies to the third and subsequent embodiments).

The sealing member 300 is a member that closes the opening portion 41b on the radially inner side of the slot 41. In the present embodiment, the sealing member 300 is a member that closes the first opening portion 41b1 as illustrated in Figs. 4A and 4B. Specifically, the sealing member 300 is a member extending from one end portions to the other end portions of the first opening portion 41b1 and the second opening portion 41b2 in the circumferential direction, and exists over the entire length of the stator core 10 in the axial direction. Therefore, the sealing member 300 closes the first opening portion 41b1.

In the present embodiment, the sealing member 300 exists not only in the first opening portion 41b1 but also in part of the second opening portion 41b2. However, the radially outer surface of the sealing member 300 is not in contact with the coil 20 and the insulating member 21. That is, the space formed between the sealing member 300 and the coil 20 extends in the axial direction, penetrates to both ends of the stator core 10 in the axial direction, and becomes the refrigerant flow path.

The radial thickness of the sealing member 300 is thinner at the center in the circumferential direction than at the end portion in the circumferential direction. Specifically, a recess 300a is formed in the radially inner surface of the sealing member 300. The recess 300a is a portion whose thickness decreases radially outward. According to the above configuration, the flow path through which the refrigerant flows can be formed between the stator core 10 and the rotor, not illustrated, existing on the radially inner side of the stator core 10. Therefore, the cooling efficiency of the stator core 10 and the rotor can be improved as compared with the case where the recess 300a does not exist on the radially inner side of the sealing member 300.

In order not to reduce the amount of magnetic flux entering the stator core 10 from the rotor, it is preferable that the gap between the stator core 10 and the rotor be small. However, in a case where the gap between the stator core 10 and the rotor is small, the presence of the refrigerant in the gap generates resistance that hinders rotation of the rotor with respect to the stator core 10, and drag loss occurs. In a case where the recess 300a is formed on the radially inner side of the sealing member 300 as in the present embodiment, the refrigerant can flow into the recess 300a, so that the drag loss can be reduced as compared with the case where the recess 300a is not formed.

Furthermore, also in the present embodiment, the sealing member 300 does not exist on the radially inner side with respect to the radially inner surface of the tooth 40. Therefore, the radially outer surface of the rotor can be brought closer to the radially inner surface of the tooth 40, and the amount of magnetic flux from the rotor entering the stator core 10 can be prevented from being reduced.

Further, the recess 300a is also formed by providing a curved surface on the radially inner side of the sealing member 300. Therefore, as compared with the case where the recess 300a is formed in a shape other than the curved surface, the resistance acting on the refrigerant flowing while being in contact with the recess 300a can be reduced. Furthermore, also in the present embodiment, both ends of the sealing member 300 in the circumferential direction may be brought into close contact with the wall surfaces of both ends of the first opening portion 41b1 in the circumferential direction by curing a thermosetting resin, or may be brought into close contact with the wall surfaces of both ends of the first opening portion 41b1 in the circumferential direction by an adhesive.

Furthermore, in the present embodiment, since the sealing member 300 also exists in the second opening portion 41b2, the sealing member 300 is unlikely to fall off radially inward. Specifically, the opening portion 41b includes the first opening portion 41b1 existing on the innermost side in the radial direction and the second opening portion 41b2 existing adjacent to the first opening portion 41b1 on the radially outer side.

The circumferential width of the first opening portion 41b1 is substantially constant at the first width W1. That is, in the first opening portion 41b1, a state in which the circumferential width is the first width W1 is continuous in the axial direction and the radial direction. Therefore, the first opening portion 41b1 is an opening the circumferential width of which is the constant first width W1 over the entire length of the stator core 10 when viewed from the radial direction. On the other hand, regarding the width of the second opening portion 41b2, the width of the section adjacent to the first opening portion 41b1 is the second width W2, which is the largest, and the width gradually decreases toward the radially outer side. In addition, at the boundary portion between the second opening portion 41b2 and the coil arrangement portion 41a, the circumferential width of the second opening portion 41b2 is substantially constant. The second opening portion 41b2 is a hole extending in the axial direction in a state where the cross-sectional shape in a direction perpendicular to the axial direction is the same.

As illustrated in Fig. 4B, at least at a section where the first opening portion 41b1 and the second opening portion 41b2 are adjacent to each other, the circumferential width W2 of the second opening portion 41b2 is larger than the circumferential width W1 of the first opening portion 41b1.

Further, in the example illustrated in Fig. 4B, when viewed along the axial direction, an internal angle α formed by a wall surface 41b11 of the first opening portion 41b1 and a wall surface 41b21 of the second opening portion 41b2 is 90°. In the above configuration, the sealing member 300 closes at least the second opening portion 41b2. That is, the sealing member 300 exists at least in the second opening portion 41b2. At least in a section where the first opening portion 41b1 and the second opening portion 41b2 are adjacent to each other, the width of the second opening portion 41b2 is larger than the width of the first opening portion 41b1. Therefore, even if a force acts radially inward on the sealing member 300, the movement of the sealing member 300 is restricted by the wall surface 41b21, and the likelihood that the sealing member 300 falls radially inward is reduced.

Note that the internal angle α formed by the wall surface 41b11 of the first opening portion 41b1 and the wall surface 41b21 of the second opening portion 41b2 is preferably 90° or less. That is, if the internal angle α is 90° or less, it is possible to more reliably prevent the sealing member 300 from falling radially inward as compared with a case where the internal angle α is larger than 90°.

### (4) Third and Fourth Embodiments:

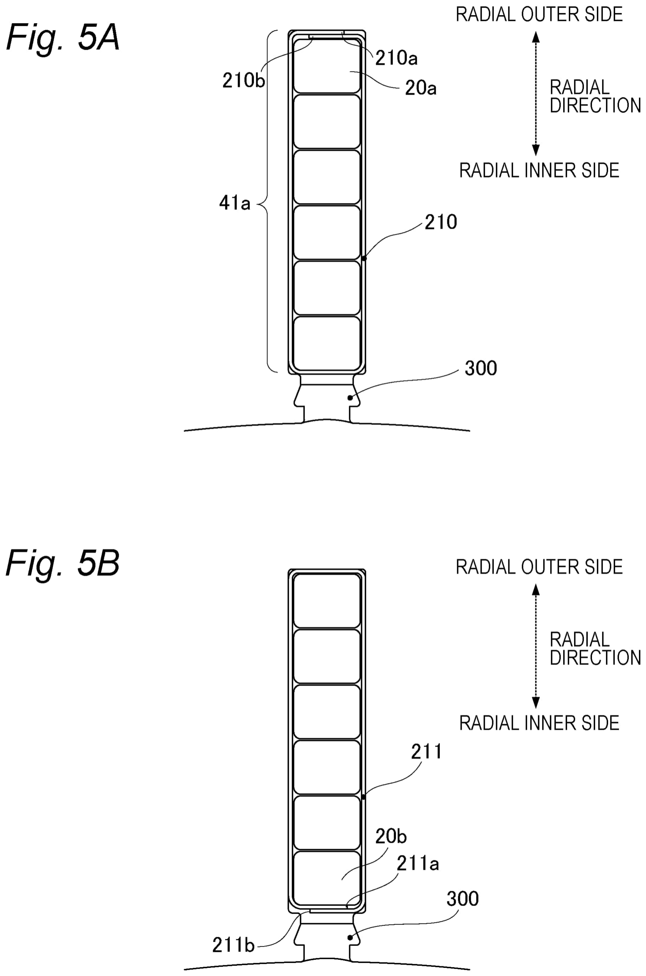

Furthermore, the shape of the insulating member and the attachment mode thereof to the coil 20 are not limited to those in the first and second embodiments. Figs. 5A and 5B are views illustrating third and fourth embodiments different from the first and second embodiments in the attachment mode of the insulating member. In the third and fourth embodiments, the configuration excluding the attachment mode of the insulating member is similar to the configuration of the second embodiment.

In the third embodiment illustrated in Fig. 5A, both ends of an insulating member 210 are sandwiched between the radially outer surface of a coil 20a located on the outermost side in the radial direction and the radially outermost surface of the coil arrangement portion 41a of the slot 41. Specifically, one end portion 210a of the insulating member 210 is sandwiched between the radially outermost surface of the coil arrangement portion 41a and the other end portion 210b of the insulating member 210. The other end portion 210b of the insulating member 210 is sandwiched between the radially outer surface of the coil 20a located on the outermost side in the radial direction and the one end portion 210a of the insulating member 210. In such a configuration, the end portions of the insulating member 210 do not come into contact with the refrigerant flow path formed on the radially outer side of the sealing member 300, and the flow of the refrigerant is not hindered by the end portions of the insulating member 210.

In the fourth embodiment illustrated in Fig. 5B, an end portion of an insulating member 211 is in contact with the radially inner surface of a coil 20b located on the innermost side in the radial direction. Specifically, one end portion 211a of the insulating member 211 is sandwiched between the radially inner surface of the coil 20b located on the innermost side in the radial direction and the other end portion 211b of the insulating member 211. The other end portion 211b of the insulating member 211 is in contact with the one end portion 211a of the insulating member 211. In the above configuration, the end portions of the insulating member 211 do not extend toward the refrigerant flow path formed on the radially outer side of the sealing member 300, and the flow of the refrigerant is not hindered by the end portions of the insulating member 211.

### (5) Fifth to Eighth Embodiments:

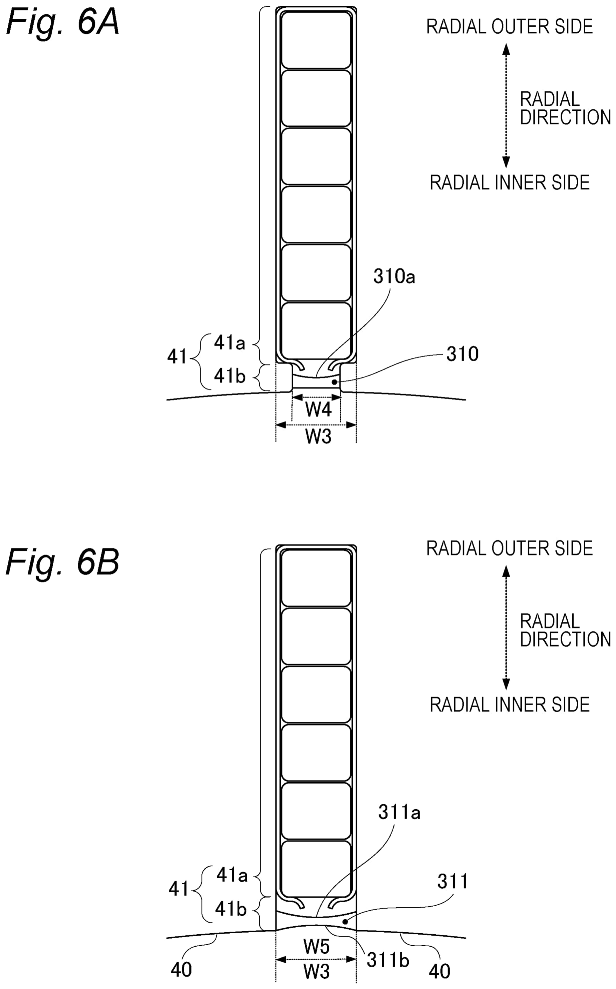

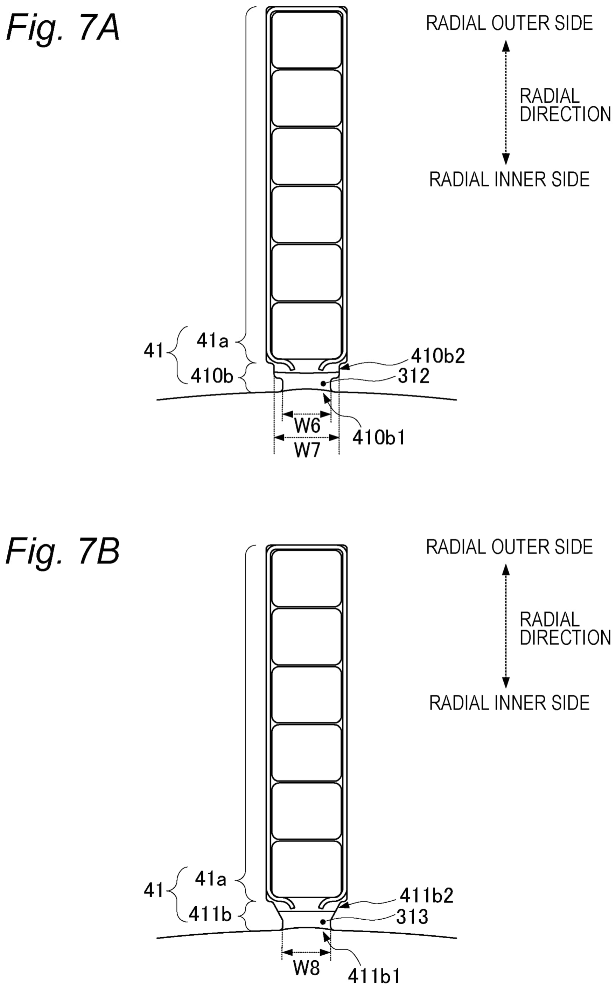

Furthermore, the shape of the opening portion 41b is not limited to the shapes in the first to fourth embodiments described above. Figs. 6A, 6B, 7A, and 7B are views illustrating fifth to eighth embodiments in each of which the shape of the opening portion 41b is different from the shapes in the first to fourth embodiments described above. In the fifth embodiment, a circumferential width W4 of the opening portion 41b is constant. In the fifth embodiment, the circumferential width W4 of the opening portion 41b is smaller than the circumferential width W3 of the coil arrangement portion 41a. The end portions of a sealing member 310 in the circumferential direction are in close contact with the wall surfaces of both ends of the opening portion 41b in the circumferential direction. Also in this configuration, since the radially outer surface of the sealing member 310 is a recess 310a, the amount of refrigerant flowing on the radially outer side of the sealing member 310 can be increased as compared with the configuration in which the recess 310a is not formed.

In the sixth embodiment, a circumferential width W5 of the opening portion 41b is constant. In the sixth embodiment, the circumferential width W5 of the opening portion 41b is equal to the circumferential width W3 of the coil arrangement portion 41a. Even in this configuration, the circumferential width W5 of the opening portion 41b is not larger than the circumferential width W3 of the coil arrangement portion 41a. Therefore, the amount of magnetic flux entering the tooth 40 from the rotor is not excessively reduced. Note that in the sixth embodiment, a sealing member 311 that closes the opening portion 41b is formed with recesses 311a and 311b on the radially outer surface and the radially inner surface, respectively. Therefore, the amount of the refrigerant flowing on the radially outer side of the sealing member 311 can be increased as compared with the configuration in which the recess 311a is not formed, and the amount of refrigerant flowing on the radially inner side of the sealing member 311 can be increased as compared with the configuration in which the recess 311b is not formed.

In the seventh embodiment, an opening portion 410b includes a first opening portion 410b1 existing on the innermost side in the radial direction and a second opening portion 410b2 existing adjacent to the first opening portion 410b1 on the radially outer side. The circumferential width of the first opening portion 410b1 is substantially constant at a width W6. On the other hand, the circumferential width of the second opening portion 410b2 is substantially constant at a width W7. In addition, width W7 > width W6. Also in this configuration, since a sealing member 312 exists at least in the second opening portion 410b2, it is possible to reduce the likelihood that the sealing member 312 falls radially inward.

In the eighth embodiment, an opening portion 411b includes a first opening portion 411b1 existing on the innermost side in the radial direction and a second opening portion 411b2 existing adjacent to the first opening portion 411b1 on the radially outer side. The circumferential width of the first opening portion 411b1 is substantially constant at a width W8. On the other hand, the circumferential width of the second opening portion 411b2 gradually increases toward the radially outer side. Also in this configuration, since the sealing member 312 exists at least in the second opening portion 411b2, it is possible to reduce the likelihood that the sealing member 312 falls radially inward.

### (6) Other Embodiments and the like:

The above embodiments are examples for carrying out the present disclosure, and various other embodiments can be adopted. For example, the shape, size, arrangement, and the like of the insulating member 21 may be different from those of the above-described embodiments. In addition, the shapes of the sealing member 30, the tooth 40, and the slot 41 are not limited to the shapes in the above-described embodiments. For example, the radial thickness of the sealing member 30 may be constant in the vicinity of the end portion in the circumferential direction and may be thin only in the vicinity of the center in the circumferential direction.

It is sufficient if the stator core includes a plurality of teeth arranged in the circumferential direction and a plurality of slots formed between the teeth in the circumferential direction and opened radially inward. That is, it is sufficient if the stator core is fixed to a fixed portion and can apply a magnetic field to the rotor. The stator core is typically a member having a ring shape and includes a plurality of teeth.

It is sufficient if the plurality of teeth are formed so as to be aligned in the circumferential direction, and the shape is not limited. However, the teeth are not connected on the radially inner side and are open. However, the opening portion is sealed by the sealing member. It is sufficient if the teeth are portions where the coils are wound or arranged, and the number, size, and the like of the teeth are not limited. Although the stator core has a ring shape, the shape of the ring, for example, the shape of the outer periphery, the inner periphery, or the like is not limited, and the outer periphery may be a polygon. It is sufficient if the slot is a space formed between the teeth and is a space in which the coil is disposed. The number, size, and the like of the slots are not limited.

It is sufficient if the sealing member is a member that closes the opening on the radially inner side of the slot and has a radial thickness thinner at the center in the circumferential direction than at the end portion in the circumferential direction. That is, it is sufficient if the sealing member closes the opening on the radially inner side of the slot to form a flow path through which the refrigerant can flow in the axial direction in the slot. In addition, the radial thickness of the sealing member is thinner at the center in the circumferential direction than at the end portion in the circumferential direction.

Therefore, at least one of the radially outer side and the radially inner side of the sealing member is a recess. Therefore, the refrigerant flow path becomes larger than that in a case where no recess exists, and the cooling efficiency can be enhanced. In order to increase the refrigerant flow path in the slot, it is sufficient if the recess is formed in the radially outer surface of the sealing member. In order to increase the refrigerant flow path between the stator core and the rotor, it is sufficient if the recess is formed in the radially inner surface of the sealing member.

It is sufficient if the refrigerant flow path existing in the slot is formed in a space inside the slot existing radially outside the sealing member. That is, the refrigerant flow path may be formed at an arbitrary position in the space inside the slot existing radially outside the sealing member. As in the above-described embodiments, the refrigerant flow path and the sealing member may be in contact with each other, or the sealing member and the refrigerant flow path may not be in contact with each other.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A stator (100) comprising:
a stator core (10) having a ring shape, the stator core (10) including a plurality of teeth (40) arranged in a circumferential direction and a plurality of slots (41) each of which is formed between the plurality of teeth (40) in the circumferential direction and opened radially inward; and
a sealing member (30, 300, 310, 311, 312) that closes an opening (41b, 410b, 411b) on a radially inner side of each of the plurality of slots (41) and has a radial thickness at a center in the circumferential direction thinner than a radial thickness at an end portion in the circumferential direction,
wherein a space (41b2) inside the each of the plurality of slots (41) existing radially outside the sealing member (30, 300, 310, 311, 312) is a refrigerant flow path.

2. The stator (100) according to Claim 1, wherein in the sealing member (30, 300, 310, 311, 312), a portion having a thin radial thickness includes a recess (30a, 310a, 311a) that is provided on a radially outer surface of the sealing member (30, 300, 310, 311, 312) and is recessed radially inward.

3. The stator (100) according to Claim 1 or 2, wherein in the sealing member (30, 300, 310, 311, 312), a portion having a thin radial thickness includes a recess (300a, 311b) that is provided on a radially inner surface of the sealing member (30, 300, 310, 311, 312) and is recessed radially outward.

4. The stator (100) according to any one of Claims 1 to 3, wherein in the sealing member (30, 300, 310, 311, 312), a portion having a thin radial thickness includes a curved surface that is provided on at least one of a radially outer surface or a radially inner surface of the sealing member (30, 300, 310, 311, 312).

5. The stator (100) according to any one of Claims 1 to 4,
wherein the opening (41b) on the radially inner side of the each of the plurality of slots (41) includes:
a first opening portion (41b1) that exists on an innermost side in a radial direction; and
a second opening portion (41b2) that exists adjacent to the first opening portion (41b1) on a radially outer side,
at least at a section where the first opening portion (41b1) and the second opening portion (41b2) are adjacent to each other, a circumferential width (W2) of the second opening portion (41b2) is larger than a circumferential width (W1) of the first opening portion (41b1),
an internal angle formed by a wall surface (41b11) of the first opening portion (41b1) and a wall surface (41b21) of the second opening portion (41b2) when viewed along an axial direction is 90° or less, and
the sealing member (300) closes at least the second opening portion (41b2).

6. The stator (100) according to any one of Claims 1 to 5, wherein a maximum value (W2) of a circumferential width of the opening (41b) on the radially inner side of the each of the plurality of slot (41) is smaller than a circumferential width (W3) of the each of the plurality of slots (41).

7. The stator (100) according to any one of Claims 1 to 6, wherein the sealing member (30, 300, 310, 311, 312) is bonded to the opening (41b, 410b, 411b) on the radially inner side of the each of the plurality of slots (41) by an adhesive.
